# EUROPEAN PATENT SPECIFICATION

(11) **EP 1 779 120 B1**
(45) Date of publication and mention of the grant of the patent: **27.07.2011**
(21) Application number: 05757490.7
(22) Date of filing: 23.06.2005
(51) Int. Cl.: G01P 1/08, G01P 1/10, G01D 7/00, G09F 9/302, B60L 15/00

(54) **AN ELECTRIC VEHICLE, A DISPLAY DEVICE FOR AN ELECTRIC VEHICLE AND A METHOD OF DISPLAYING INFORMATION**
ELEKTRISCHES FAHRZEUG, ANZEIGEEINRICHTUNG FÜR EIN ELEKTRISCHES FAHRZEUG UND VERFAHREN ZUM ANZEIGEN VON INFORMATIONEN
VEHICULE ELECTRIQUE, AFFICHEUR POUR VEHICULE ELECTRIQUE, ET PROCEDE D'AFFICHAGE D'INFORMATION

(30) Priority: 25.06.2004 NZ 53377004
(43) Date of publication of application: 02.05.2007
(73) Proprietor: Dynamic Controls, Christchurch (NZ)
(72) Inventor: PALMER, Ian, Christchurch (NZ); ROGERS, Richard, Christchurch, 8006 (NZ); MULICK, Anthony, Christchurch (NZ); SEED, Piers, Christchurch (NZ)
(74) Representative: Jackson, Richard Eric
(86) International application number: PCT/NZ2005/000138
(87) International publication number: WO 2006/001715

(56) References cited:
- EP-A2- 1 225 074
- DE-A1- 10 239 386
- US-A- 4 631 513
- US-A1- 2004 020 695
- US-A1- 2004 020 695
- DATABASE WPI Week 200428, Derwent Publications Ltd., London, GB; Class Q14, AN 2004-298306, XP008137549 & JP 2004 064905 A (TOSHIBA KK) 26 February 2004
- DATABASE WPI Week 200173, Derwent Publications Ltd., London, GB; Class P33, AN 2001-629562, XP008137703 & JP 2001 211508 A (SHIKOKU SEISAKUSHO KK) 03 August 2001

## Description

### Field of the invention

The invention relates to an electric vehicle, particularly to a powerchair, scooter or like electric vehicle. The invention also relates to a display device for electric vehicle, and in particular to the display of current and maximum allowable vehicle speed. The invention also relates to methods for the display of vehicle speed information.

### Background to the invention

The speed of powerchairs, scooters and the like is typically controlled by a "speed pot" (a potentiometer controlled by a knob), a joystick or up/down buttons. Where a "speed pot" is employed the current speed of the electric may be indicated by the position of the knob.

Speedometers are sometimes employed but they are expensive as they require components to make actual speed measurements. Where employed they are generally implemented as numerical displays, typically LCD displays, displaying absolute speed.

Some electric vehicles adjust the maximum allowable speed in dependence upon the mode of operation of the electric vehicle. If a seat of the vehicle is raised the maximum allowable speed may be reduced. Likewise, the maximum allowable speed may be adjusted according to user profile information (i.e. functionality appropriate to the capacity of the user) or operating conditions (i.e. indoor/outdoor use).

When the mode of operation changes the user receives no indication that the maximum allowable speed is changing or what the maximum allowable speed in that mode is. To a user absolute speed information is generally of less importance than an indication of current speed in the context of maximum allowable speed and maximum allowable speed (i.e. what is the maximum allowable speed and how fast am I going compared to the maximum allowable speed?).

It is an object of the present invention to provide an electric vehicle, a display device for electric vehicle and a method of displaying information that effectively communicates the maximum allowable speed and/or the speed of the vehicle relative to the maximum allowable speed or to at least provide the public with useful choice.

### Summary of the invention

The invention provides a display device and an electric vehicle according to the independent claims. The dependent claims include optional features.

### Brief Description of the Drawings

The invention will now be described by way of example with reference to the accompanying drawings in which:
**Figure 1** shows the major components of an electric vehicle in block diagram form;
**Figure 2** shows a vehicle speed display device consisting of a number of display elements;
**Figure 3** shows a method of indicating current vehicle speed and maximum allowable speed;
**Figure 4** shows the method shown in figure 3 when maximum allowable vehicle speed is reduced;
**Figure 5** shows an alternative method for displaying current vehicle speed and maximum allowable speed;
**Figure 6** shows the method shown in figure 5 when maximum allowable vehicle speed is reduced;
**Figure 7** shows a further alternative method for displaying current vehicle speed and maximum allowable speed;
**Figure 8** shows a further alternative method for displaying current vehicle speed and maximum allowable speed;
**Figure 9** shows an implementation utilising an LCD;
**Figure 10** shows a method for displaying current vehicle speed where the display is rescaled according to maximum allowable speed for a given mode of operation;
**Figure 11** shows a variant of the method shown in figure 10.

### Modes for Carrying out the Invention

The invention may be implemented in a variety of electric vehicles such as powerchairs, scooters etc. The general operation of such an electric vehicle is well-known.

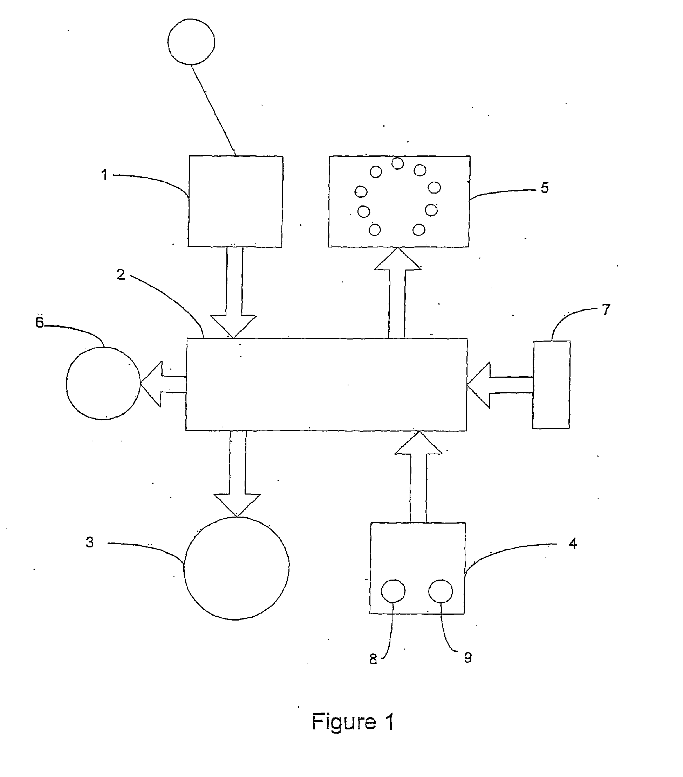

Figure 1 shows in block diagram form the major electrical and electronic components of an electric vehicle according to one embodiment. A controller 2 receives inputs from user input devices such as joystick 1 and user interface module 4. Joystick 1 provides speed input information to controller 2. Wheel drive motor 3 is driven by controller 2 in response to the input from joystick 1 so as to attain the speed requested by a user.

User interface module 4 includes up/down buttons 8, 9. In response to actuation of buttons 8 and 9 controller 2 applies drive signals to motor 6 to raise and lower the seat of the vehicle.

Data may be communicated to controller 2 via interface port 7. This enables user profile information and the like to be communicated to controller 2 so that it operates within parameters appropriate to the user profile.

Display device 5 indicates the current speed and/or maximum allowable-speed in a manner that is more fully illustrated in the following drawings.

The electric vehicle is capable of operating in a number of modes. The mode may be determined by user profile information supplied to the controller. Alternatively, the mode may be determined based upon the configuration of the electric vehicle, such as seat height. If the height of the seat of the vehicle is adjusted the maximum allowable speed is preferably limited accordingly.

Controller 2 determines the appropriate output to wheel drive motor 6 based on user input via joystick 1. According to one embodiment controller 2 generates output signals to drive display device 5 based on its calculation of current vehicle speed in accordance with user input, and not based on any actual measurement of vehicle speed. The current vehicle speed may be calculated according to one or more algorithm or based on data estimating current speed utilising historical speed and user input information. According to another embodiment controller 2 monitors a parameter of drive motor 6, such as terminal voltage, and determines vehicle speed based on this.

Although figure 1 shows a joystick 1 as the user input device to control vehicle speed a user input device such as user input device 4 could be used to control vehicle speed utilising up down buttons 8 and 9. Likewise, a potentiometer could be utilised to control vehicle speed.

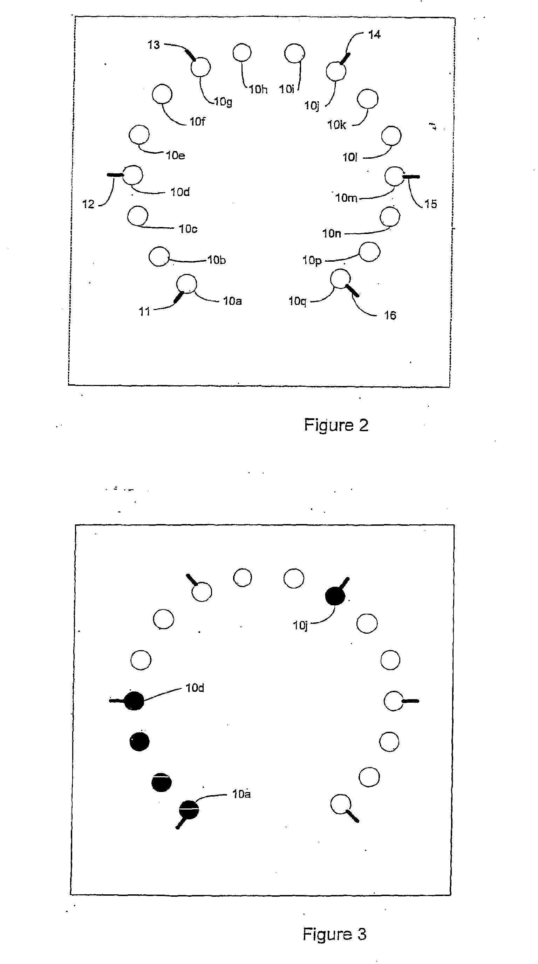

Referring now to figure 2 a display according to preferred embodiment is shown. This display includes 15 display elements 10a to 10q in a semicircular arrangement. The display elements may be LEDs, lamps etc. Interval markings 11 to 16 are provided at proportions of full speed: 0% (11); 20% (12); 40% (13); 60% (14); 80% (15); and 100% (16).

Referring now to figure 3, a first display method is shown. According to this method current vehicle speed is indicated by actuating all display elements 10a to 10d in a clockwise manner up to and including the display element indicating current vehicle speed (10d). Display element 10j is illuminated to indicate the maximum allowable speed in the current mode of operation.

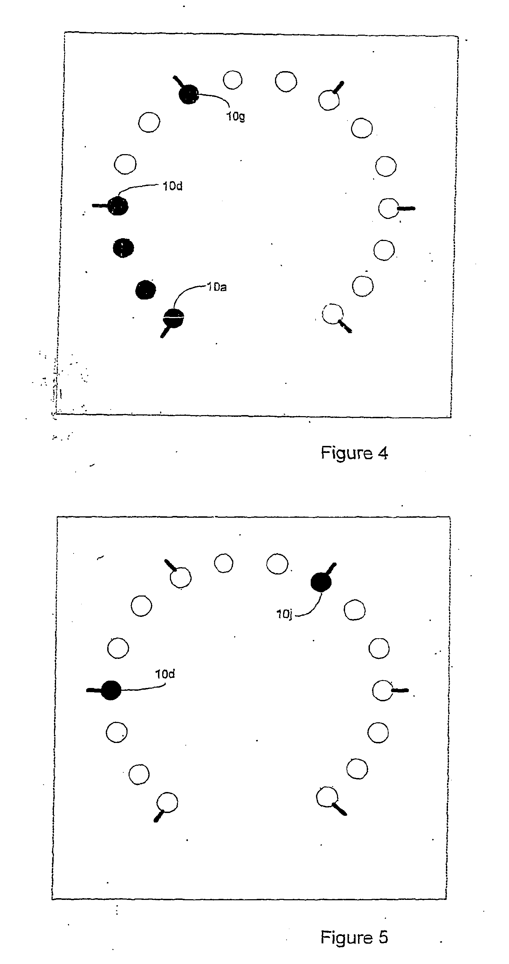

Figure 4 shows how the display changes when the mode of operation is changed. For example, if the seat of the vehicle is raised by actuating button 9, the mode of operation may change so that the maximum allowable speed is adjusted to be 40% of the maximum possible speed. To indicate the change in maximum allowable speed display element 10g is illuminated instead of display element 10j. During a change in mode of operation the user may be notified of the change by one or more display elements flashing during the change. In this way a user is notified that the maximum allowable speed has been reduced from 60% to 40% of the maximum allowable speed.

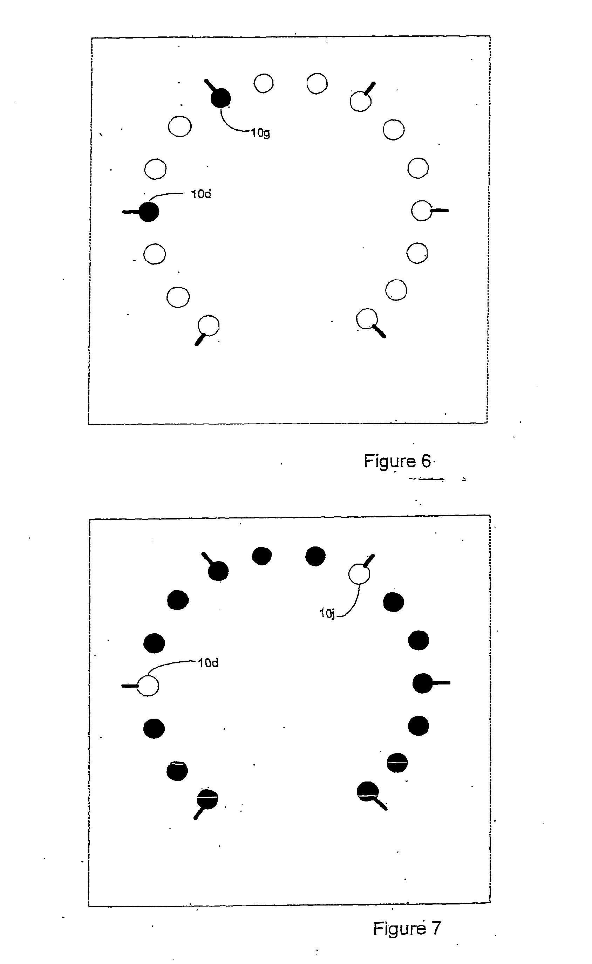

Referring now to figure 5 an alternative display method is shown. This method is similar to that of figures 3 and 4 except that only a single display element 10d is illuminated to display current speed. Figure 6 is analogous to figure 4 where the maximum allowable speed has been reduced from 60% to 40%.

Figure 7 shows a display method in which the display elements are driven in an inverse manner to that of figures 5 and 6. Instead of illuminating a display element corresponding to the current speed and the maximum allowable speed, all display elements are illuminated except for the display elements indicating current speed 10d and maximum allowable speed 10j.

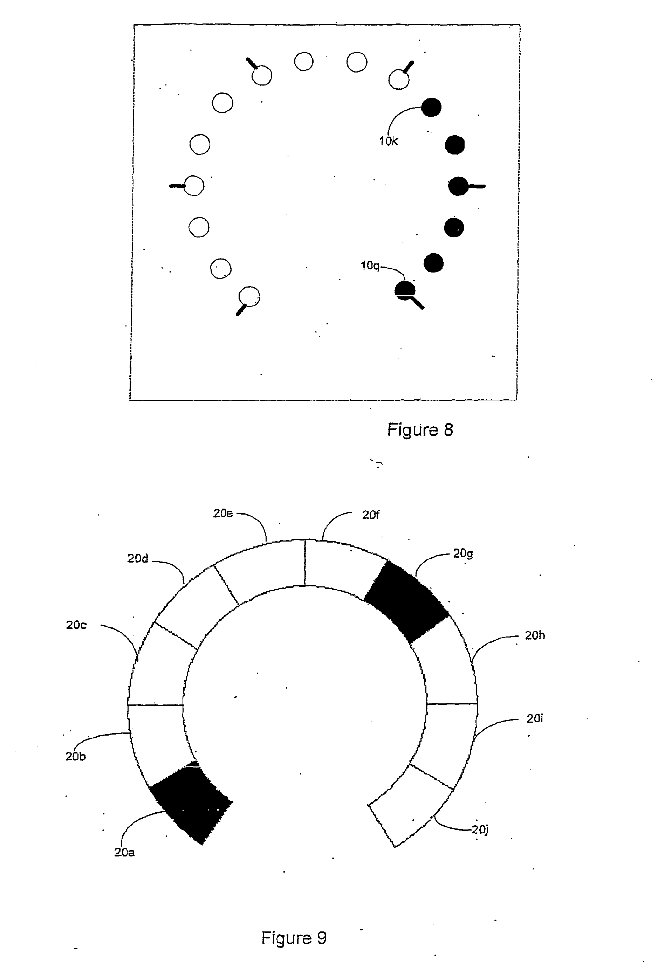

Referring now to figure 8 a further alternative display method is shown. According to this method all display elements between and including the display elements indicating the current speed 10k and the maximum allowable speed 10q are illuminated.

Figure 9 shows an LCD display consisting of 10 display segments 20a to 20j implementing a display method analogous to that shown in figure 5. It will be appreciated that any of the display methods described above may be implemented using such an LCD display.

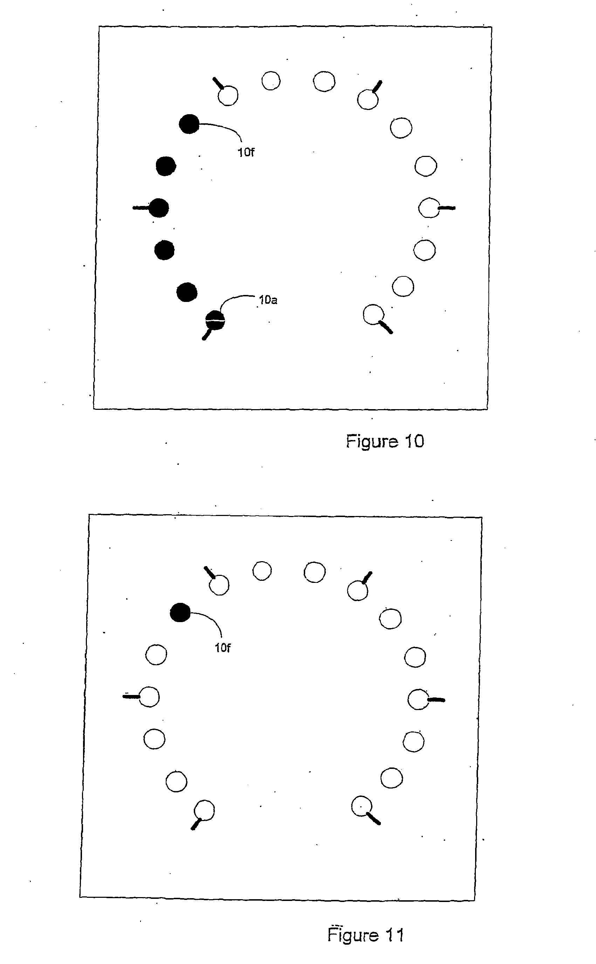

A further method for displaying current vehicle speed in relation to the maximum allowable vehicle speed is to effectively rescale the display when the mode of operation changes. Thus, with reference to figure 2, display element 10q would always display the maximum speed allowable for any given mode of operation. Thus, for any given mode of operation, the display elements will be actuated to represent vehicle speed as a proportion of the maximum allowable speed for the current mode of operation. Thus, for the example shown in figure 3, the speed would be indicated as a third of the maximum allowable speed as shown in figure 10, or the alternative embodiment shown in figure 11 where a single element is actuated.

One or more display element may flash during a change in mode to indicate to a user that a change in mode has occurred. Sometimes vehicles are deliberately programmed so that the maximum allowable vehicle speed is less than the maximum possible vehicle speed. Accordingly, in another method the display may be rescaled to represent the maximum allowable vehicle speed as a proportion of the maximum possible vehicle speed.

There is thus provided a simple display which clearly communicates to a user the maximum allowable speed for any given mode of operation. The user also knows their current speed in relation to the maximum allowable speed. Further, the calculation of current speed based on user input information greatly simplifies the provision of useful speed information to a user and reduces cost.

While the present invention has been illustrated by the description of the embodiments thereof, and while the embodiments have been described in detail, it is not the intention of the Applicant to restrict or in any way limit the scope of the appended claims to such detail. Additional advantages and modifications will readily appear to those skilled in the art. Therefore, the invention in its broader aspects is not limited to the specific details, representative apparatus and method, and illustrative examples shown and described. Accordingly, departures may be made from such details without departure from the spirit or scope of the Applicant's general inventive concept.

## Claims

1. A display device (5) for an electric vehicle where the electric vehicle is capable of operating in a number of modes having different maximum allowable speeds based on the modes, wherein the display device (5) includes a number of display elements (10) which display the speed of the vehicle, the device (5) **characterised in that** the speed of the vehicle is displayed by actuating the display elements (10) to indicate the speed of the vehicle in relation to a maximum allowable speed, wherein the maximum allowable speed is based on one or more selected modes of operation in which the vehicle is configured.

2. A display device (5) for an electric vehicle as claimed in claim 1 wherein the display elements (10) are configured in a progressive arrangement.

3. A display device (5) for an electric vehicle as claimed in claim 2 wherein display elements (10) are cumulatively actuated in sequence to indicate vehicle speed.

4. A display device (5) for an electric vehicle as claimed in claim 2 wherein display elements (10) are cumulatively deactuated in sequence to indicate vehicle speed.

5. A display device (5) for an electric vehicle as claimed in claim 2 wherein a single display element (10) is actuated indicative of current vehicle speed.

6. A display device (5) for an electric vehicle as claimed in claim 2 wherein all display elements (10) are actuated apart from a single display element (10) which is deactuated to indicate current vehicle speed.

7. A display device (5) for an electric vehicle as claimed in any one of the preceding claims wherein all display elements (10) are actuated when the actual speed of the vehicle is equal to the maximum allowable speed for the mode of operation.

8. A display device (5) for an electric vehicle as claimed in any one the preceding claims wherein the maximum speed value is dependent upon the height of a seat of the vehicle.

9. A display device (5) for an electric vehicle as claimed in any one of the preceding claims wherein the maximum speed value is dependent upon user profile information.

10. A display device (5) for an electric vehicle as claimed in any one of the preceding claims wherein the maximum speed value is dependent upon the conditions in which the vehicle is being used.

11. A display device (5) for an electric vehicle as claimed in any one of the preceding claims wherein one or more of the display elements (10) flash during a change in operating mode.

12. An electric vehicle including:
a user input device (1);
one or more drive motor (3) for driving one or more wheel of the vehicle;
a controller (2) for providing drive signals to the one or more drive motor (3) in response to user input via the user input device (1), wherein the controller (2) is operable in a plurality of modes allowing different maximum operating speeds; and
a display device (5) as claimed in any one of the preceding claims.

## Patentansprüche

1. Anzeigeeinrichtung (5) für ein Elektrofahrzeug, wobei das Elektrofahrzeug in einer Anzahl von Modi mit verschiedenen höchsten zulässigen Geschwindigkeiten auf der Basis der Modi arbeiten kann, wobei die Anzeigeeinrichtung (5) eine Anzahl von Anzeigeelementen (10) enthält, die die Geschwindigkeit des Fahrzeugs anzeigen, wobei die Einrichtung (5) **dadurch gekennzeichnet ist, dass** die Geschwindigkeit des Fahrzeugs durch Betätigen der Anzeigeelemente (10) angezeigt wird, um die Geschwindigkeit des Fahrzeugs in Relation zu einer größten zulässigen Geschwindigkeit anzuzeigen, wobei die größte zulässige Geschwindigkeit auf der Basis von einem oder mehreren ausgewählten Betriebsmodi, in denen das Fahrzeug konfiguriert ist, basiert.

2. Anzeigeeinrichtung (5) für ein Elektrofahrzeug nach Anspruch 1, wobei die Anzeigeelemente (10) in einer progressiven Anordnung konfiguriert sind.

3. Anzeigeeinrichtung (5) für ein Elektrofahrzeug nach Anspruch 2, wobei die Anzeigeelemente (10) nacheinander kumulativ betätigt werden, um die Fahrzeuggeschwindigkeit anzuzeigen.

4. Anzeigeeinrichtung (5) für ein Elektrofahrzeug nach Anspruch 2, wobei die Anzeigeelemente (10) nacheinander kumulativ deaktiviert werden, um die Fahrzeuggeschwindigkeit anzuzeigen.

5. Anzeigeeinrichtung (5) für ein Elektrofahrzeug nach Anspruch 2, wobei ein einzelnes Anzeigeelement (10) betätigt wird, das die aktuelle Fahrzeuggeschwindigkeit anzeigt.

6. Anzeigeeinrichtung (5) für ein Elektrofahrzeug nach Anspruch 2, wobei alle Anzeigeelemente (10) außer einem einzelnen Anzeigeelement (10) betätigt werden, das deaktiviert wird, um die aktuelle Fahrzeuggeschwindigkeit anzuzeigen.

7. Anzeigeeinrichtung (5) für ein Elektrofahrzeug nach einem der vorhergehenden Ansprüche, wobei alle Anzeigeelemente (10) betätigt werden, wenn die Istgeschwindigkeit des Fahrzeugs gleich der größten zulässigen Geschwindigkeit für den Betriebsmodus ist.

8. Anzeigeeinrichtung (5) für ein Elektrofahrzeug nach einem der vorhergehenden Ansprüche, wobei der größte Geschwindigkeitswert von der Höhe eines Sitzes des Fahrzeugs abhängt.

9. Anzeigeeinrichtung (5) für ein Elektrofahrzeug nach einem der vorhergehenden Ansprüche, wobei der größte Geschwindigkeitswert von Benutzerprofilinformationen abhängt.

10. Anzeigeeinrichtung (5) für ein Elektrofahrzeug nach einem der vorhergehenden Ansprüche, wobei der größte Geschwindigkeitswert von den Bedingungen abhängt, unter denen das Fahrzeug verwendet wird.

11. Anzeigeeinrichtung (5) für ein Elektrofahrzeug nach einem der vorhergehenden Ansprüche, wobei eines oder mehrere der Anzeigeelemente (10) während einer Änderung des Betriebsmodus blinken.

12. Elektrofahrzeug, das Folgendes enthält:
eine Benutzereingabeeinrichtung (1);
einen oder mehrere Antriebsmotoren (3) zum Antreiben von einem oder mehreren Rädern des Fahrzeugs;
einen Controller (2) zum Bereitstellen von Antriebssignalen an den einen oder die mehreren Anriebsmotoren (3) als Reaktion auf eine Benutzereingabe über die Benutzereingabeeinrichtung (1), wobei der Controller (2) in mehreren Modi arbeiten kann, die verschiedene größte Betriebsgeschwindigkeiten gestatten; und
eine Anzeigeeinrichtung (5) nach einem der vorhergehenden Ansprüche.

## Revendications

1. Dispositif d'affichage (5) pour véhicule électrique, dans lequel le véhicule électrique est capable de fonctionner dans un certain nombre de modes ayant différentes vitesses maximales autorisées basées sur les modes, le dispositif d'affichage (5) comportant un certain nombre d'éléments d'affichage (10) qui affichent la vitesse du véhicule, le dispositif d'affichage (5) étant **caractérisé en ce que** la vitesse du véhicule est affichée en activant les éléments d'affichage (10) pour indiquer la vitesse du véhicule par rapport à une vitesse maximale autorisée, la vitesse maximale autorisée étant basée sur un ou plusieurs modes de fonctionnement sélectionnés dans lesquels le véhicule est configuré.

2. Dispositif d'affichage (5) pour véhicule électrique selon la revendication 1, dans lequel les éléments d'affichage (10) sont configurés en un agencement progressif.

3. Dispositif d'affichage (5) pour véhicule électrique selon la revendication 2, dans lequel les éléments d'affichage (10) sont activés de manière cumulée successivement pour indiquer la vitesse du véhicule.

4. Dispositif d'affichage (5) pour véhicule électrique selon la revendication 2, dans lequel les éléments d'affichage (10) sont désactivés de manière cumulée successivement pour indiquer la vitesse du véhicule.

5. Dispositif d'affichage (5) pour véhicule électrique selon la revendication 2, dans lequel un élément d'affichage unique (10) est activé pour indiquer la vitesse actuelle du véhicule.

6. Dispositif d'affichage (5) pour véhicule électrique selon la revendication 2, dans lequel tous les éléments d'affichage (10) sont activés à part un élément d'affichage unique (10) qui est désactivé pour indiquer la vitesse actuelle du véhicule.

7. Dispositif d'affichage (5) pour véhicule électrique selon l'une quelconque des revendications précédentes, dans lequel tous les éléments d'affichage (10) sont activés lorsque la vitesse réelle du véhicule est égale à la vitesse maximale autorisée pour le mode de fonctionnement.

8. Dispositif d'affichage (5) pour véhicule électrique selon l'une quelconque des revendications précédentes, dans lequel la valeur de la vitesse maximale dépend de la hauteur d'un siège du véhicule.

9. Dispositif d'affichage (5) pour véhicule électrique selon l'une quelconque des revendications précédentes, dans lequel la valeur de la vitesse maximale dépend d'informations de profil d'utilisateur.

10. Dispositif d'affichage (5) pour véhicule électrique selon l'une quelconque des revendications précédentes, dans lequel la valeur de la vitesse maximale dépend des conditions dans lesquelles le véhicule est utilisé.

11. Dispositif d'affichage (5) pour véhicule électrique selon l'une quelconque des revendications précédentes, dans lequel un ou plusieurs des éléments d'affichage (10) clignotent pendant un changement de mode de fonctionnement.

12. Véhicule électrique comprenant :
un dispositif d'entrée utilisateur (1) ;
un ou plusieurs moteurs d'entraînement (3) pour entraîner une ou plusieurs roues du véhicule ;
un contrôleur (2) pour fournir des signaux d'entraînement au(x) moteur(s) d'entraînement (3) en réponse à l'entrée utilisateur par l'intermédiaire du dispositif d'entrée utilisateur (1), le contrôleur (2) pouvant fonctionner dans une pluralité de modes permettant différentes vitesses de fonctionnement maximales ; et
un dispositif d'affichage (5) selon l'une quelconque des revendications précédentes.
